# FASCICULE DE BREVET EUROPEEN

(11) **EP 1 138 957 B1**
(45) Date de publication et mention de la délivrance du brevet: **27.11.2002**
(21) Numéro de dépôt: 01400778.5
(22) Date de dépôt: 27.03.2001
(51) Int. Cl.: F15B 15/19, F15B 15/22, B64G 1/64, F42B 15/36

(54) **Ecrou de séparation réarmable à faible niveau de choc induit**
Schockarmer, wiederaufladbarer Trennbolzen
Re-armable separation screw with low induced shock

(30) Priorité: 29.03.2000 FR 0003987
(43) Date de publication de la demande: 04.10.2001
(73) Titulaire: PYROALLIANCE, 78132 Les Mureaux Cedex (FR)
(72) Inventeur: Forys, Christian, 95430 Auvers sur Oise (FR); Jeanneau, Olivier, 78510 Triel sur Seine (FR)
(74) Mandataire: Pech, Bernard

(56) Documents cités:
- EP-A- 0 550 321
- EP-A- 0 657 352
- FR-A- 2 616 857
- FR-A- 2 736 615
- US-A- 3 926 090
- US-A- 4 187 759

## Description

Le domaine technique de l'invention est celui des dispositifs de liaison et de séparation d'objets tels que des microsatellites par rapport à une structure. Il s'agit plus généralement de dispositifs de mise à poste de satellite à partir d'une fusée, qui ont pour objet de déverrouiller le satellite de son support et de l'en écarter rapidement par éjection.

Dans la présente demande de brevet, les notions d'«écrou de séparation », de « déverrouillage », de « dispositif de déverrouillage » sont équivalentes.

Plus précisément, l'invention se rapporte à un écrou de séparation destiné à libérer une vis qui solidarise deux sous-ensembles d'une structure, cette libération s'effectuant par le déplacement d'une bague de libération grâce aux gaz produits par un générateur de gaz.

La spécificité de l'invention réside dans le fait que le déclenchement du dispositif de déverrouillage permet, dans une phase préliminaire, de créer un dispositif d'amortissement destiné à freiner puis à stopper en douceur la bague de libération juste avant qu'elle ne percute un obturateur. De cette manière, en évitant un choc mécanique brutal, les équipements assujettis à la structure en liaison avec l'écrou de séparation se retrouvent préservés, assurant ainsi une séparation nette et en douceur des deux sous-ensembles. En effet, cette séparation devant intervenir de façon extrêmement brève, il serait inopportun de chercher à ralentir le mécanisme de fonctionnement du dispositif pour s'affranchir de ce choc mécanique. Seul, l'intervention d'un dispositif d'amortissement approprié permet d'éviter toute perturbation due à un choc mécanique, tout en maintenant le dispositif de déverrouillage à un haut niveau de performance.

Des dispositifs d'amortissement inclus dans des dispositifs de déverrouillage de deux sous-ensembles existent déjà et ont fait l'objet de plusieurs brevets. On peut citer en particulier le brevet FR 2 736 615 qui se rapporte à un déverrouilleur à écrou fendu pour microsatellite et dont le principe de fonctionnement, mettant en jeu le coulissement de diverses pièces mécaniques comme en particulier une bague de libération autour d'un écrou, est par ailleurs bien connu. Dans le but de dissiper le choc à l'impact de certaines pièces, un amortisseur solide est fixé à l'une des extrémités du dispositif. Une simple figure du dispositif ainsi décrit, montre à l'évidence un encombrement significatif dû à la présence de cet amortisseur solide.

Le brevet US 3,926,090, décrit, quant à lui, un écrou de séparation fonctionnant également sur le principe d'un coulissement de différentes pièces. Un amortissement est réalisé par l'intermédiaire d'une chambre remplie d'air à pression ambiante, ladite chambre étant obturée par une pièce mobile. Lors du déclenchement de l'écrou, la pièce mobile tend à se déplacer brutalement dans la chambre. L'air ainsi emprisonné se comprime sous l'effet du volume qui se réduit, finissant par former un bourrelet pneumatique compressible empêchant la pièce de percuter le fond de la chambre. Un tel système d'amortissement présente l'inconvénient de ne pas être très fiable, dans la mesure où il est tributaire d'une bonne étanchéité de la chambre, difficile à obtenir dans de telles conditions. De plus, la pressurisation de la chambre s'obtenant après que la pièce se soit déplacée, le système d'amortissement n'a que très peu d'influence sur le début de la course de la pièce et doit, par conséquent, s'opposer à une très forte sollicitation toujours plus aléatoire à maîtriser.

Enfin, le brevet US 4,187,759, qui reflète l'état de la technique antérieure, est relatif à un écrou de séparation dont le principe de fonctionnement s'appuie sur l'effet conjugué d'un déplacement de la bague de libération pour libérer un écrou fendu et de la poussée d'un éjecteur pour expulser la vis de liaison prise initialement dans l'écrou. Un ressort est placé dans le dispositif pour permettre à la bague de libération de retrouver sa position initiale et donc permettre à l'écrou de séparation d'être réutilisé. Bien que n'étant pas précisé dans le brevet, ledit ressort, en se comprimant sous l'effet de la bague de libération qui se déplace, semble exercer également une fonction de décélération sur ladite bague. Mais un tel système de décélération est peu satisfaisant en terme d'amortissement dans la mesure où la bague de libération se déplaçant très rapidement, sur un temps très court, comprime brutalement le ressort jusqu'à ce que ses spires viennent au contact les unes des autres, cette mise en contact provoquant elle-même un choc. Donc, si le ressort peut légèrement atténuer le choc généré par la bague de libération, il ne peut pas, à lui tout seul, en garantir l'élimination complète.

Le dispositif de déverrouillage selon l'invention, fonctionnant par coulissement d'une bague de libération autour d'un écrou, dispose d'un dispositif d'amortissement pneumatique de ladite bague, permettant de s'affranchir de tous les problèmes précités mis en relief par l'Etat de la Technique. En effet, il est réalisé par simple afflux gazeux dans une enceinte appartenant audit dispositif de déverrouillage. Il n'implique donc aucune pièce solide supplémentaire spécialement conçue pour cette fonction d'amortissement, évitant ainsi une surcharge et un encombrement inutiles. De plus, l'afflux gazeux dans l'enceinte s'effectuant juste avant le déplacement de la bague, ou au plus tard en même temps, la fonction d'amortissement intervient dès le début de la course de ladite bague, freinant ainsi son déplacement dès le départ et évitant à celle-ci d'acquérir une trop grande énergie cinétique qui entraînerait systématiquement un choc mécanique notable. Enfin, quelles que soient les caractéristiques du dispositif de déverrouillage mis en jeu, il est toujours possible d'ajuster le couple « réserve énergétique/volume de l'enceinte » de façon à obtenir un amortissement total de la bague en toute circonstance. Pour finir, le dispositif d'amortissement inclus dans les dispositifs de déverrouillage selon l'invention, conserve sa pleine efficacité, quelle que soit la température de l'environnement, contrairement, par exemple, à certain dispositif d'amortissement solide, comme ceux utilisant des élastomères, inefficaces à basse température.

L'objet de la présente invention concerne un dispositif de déverrouillage de deux sous-ensembles, comprenant un corps, un générateur de gaz, une chambre d'expansion des gaz, une bague de libération, un éjecteur, un écrou segmenté, une vis de liaison et un obturateur, l'initiation du générateur de gaz entraînant le libération des gaz pour, d'une part, faire coulisser la bague de libération de façon à libérer les segments de l'écrou et, d'autre part, mettre en vitesse l'éjecteur de manière à venir pousser la vis de liaison pour l'éjecter dudit écrou, caractérisé en ce qu'un dispositif d'amortissement, réalisé par afflux d'un fluide compressible dans une enceinte du dispositif de déverrouillage, est créé par la libération des gaz, ledit dispositif d'amortissement étant destiné à freiner puis à stopper la bague de libération avant qu'elle n'atteigne l'obturateur.

Pour être pleinement efficace, l'enceinte doit se remplir de fluide compressible juste avant que la bague de libération n'amorce son déplacement afin que le bourrelet pneumatique agisse dès le début dudit déplacement. L'une des caractéristiques essentielles du dispositif d'amortissement est qu'il n'existe pas lorsque le dispositif de déverrouillage n'est pas activé et qu'il n'intervient qu'au moment d'être utile audit dispositif de déverrouillage. Avantageusement, le générateur de gaz est un générateur de gaz pyrotechnique comprenant une charge pyrotechnique et un dispositif d'initiation. Préférentiellement, le dispositif d'initiation comprend un système électro-pyrotechnique. De façon avantageuse, le dispositif d'amortissement est réalisé par la mise sous pression gazeuse de l'enceinte. En effet, l'envahissement de l'enceinte devant constituer une séquence extrêmement brève du processus global de déverrouillage, un fluide sous forme gazeuse paraît être une solution particulièrement adaptée.

De façon préférentielle, la mise sous pression de l'enceinte est effectuée par prélèvement de gaz au niveau de la chambre d'expansion, par l'intermédiaire d'un système de liaison mettant en communication l'enceinte à ladite chambre. Ainsi, la source énergétique du dispositif de déverrouillage, qui revêt la forme d'un générateur de gaz, a la double fonction de faire fonctionner le dispositif de déverrouillage et de créer simultanément un dispositif d'amortissement de la bague de libération, afin d'assurer une séparation des deux sous-ensembles sans choc mécanique notable.

Avantageusement, la bague de libération présente une embase élargie dont une face est au contact de la chambre d'expansion, et l'enceinte est constituée par un espace annulaire situé autour de ladite bague et dans le prolongement de ladite embase, le système de liaison étant représenté par un passage annulaire situé entre le corps du dispositif de déverrouillage et la surface latérale externe de l'embase élargie. Il est souhaitable, en effet, que l'enceinte soit proche de la chambre d'expansion pour raccourcir et simplifier le système de liaison, et pour lui permettre d'être mise sous pression rapidement. De plus, ladite enceinte doit s'intégrer dans le dispositif de déverrouillage sans créer de volume supplémentaire susceptible d'influer sur l'encombrement global dudit dispositif.

Selon un autre mode de réalisation de l'invention, l'embase élargie isole l'enceinte de la chambre d'expansion, et le système de liaison comprend au moins un canal traversant ladite embase élargie pour faire communiquer ladite enceinte à ladite chambre. Préférentiellement, le dispositif de déverrouillage comporte un dispositif de rappel permettant à la bague qui s'est déplacée lors du fonctionnement, de retrouver sa position initiale lorsque le générateur de gaz ne produit plus de gaz.

De cette manière, le dispositif de déverrouillage retrouve sa configuration de départ, avant fonctionnement, et peut ainsi être réutilisé tel quel, sans aucune modification. Par ce biais, le dispositif de déverrouillage selon l'invention peut être testé une première fois au sol avant d'être utilisé en configuration réelle, notamment, sur une fusée ou sur un missile si le test est concluant.

De façon préférentielle, l'éjecteur se présente sous la forme d'un corps cylindrique dont une extrémité se termine par une tête élargie débouchant dans la chambre d'expansion et dont l'autre extrémité est en appui contre la vis de liaison.

Avantageusement, l'éjecteur est logé dans un séparateur assimilable à une pièce sensiblement cylindrique dont une extrémité émerge dans la chambre d'expansion et dont l'autre extrémité se termine par une tête élargie venant en appui contre l'écrou.

De façon avantageuse, le dispositif de rappel est constitué par un ressort venant en appui à la fois contre la tête élargie du séparateur et l'embase élargie de la bague de libération.

L'agencement de ces pièces les unes par rapport aux autres, ainsi que leur géométrie particulière, ont pour seul but de contribuer à libérer l'écrou segmenté tout en appuyant sur la vis de liaison pour l'expulser. En effet, les gaz émis par le générateur de gaz vont simultanément pousser le séparateur au niveau de son extrémité qui émerge dans la chambre d'expansion, et l'éjecteur au niveau de sa tête élargie. La poussée sur le séparateur a pour conséquence de tendre à ouvrir l'écrou par l'intermédiaire de la tête élargie dudit séparateur, et la poussée exercée sur la tête élargie de l'éjecteur conduit à son déplacement dans le séparateur avec pour conséquence l'expulsion de la vis de liaison contre laquelle il est en appui.

Préférentiellement, la bague de libération et l'écrou comportent chacun au moins deux bourrelets annulaires dont les sections transversales présentent des lignes de pente permettant à ces deux pièces qui, au repos, sont en contact au niveau de leurs bourrelets respectifs, de coulisser l'une par rapport à l'autre sous l'effet des gaz émis, puis de retrouver ensuite leur position de repos.

Les dispositifs de déverrouillage selon l'invention mettant en jeu un dispositif d'amortissement pour la bague de libération présentent l'avantage d'être économiques et peu encombrants. Ils sont peu encombrants dans la mesure où le dispositif d'amortissement n'existe pas tant que le dispositif de déverrouillage n'est pas déclenché et est créé sous forme d'un afflux gazeux ne nécessitant pas l'intervention de pièces solides supplémentaires spécialement conçues pour cette fonction d'amortissement. Ils sont économiques car le dispositif d'amortissement emprunte une source énergétique préexistante et ne nécessite pas d'être intégré dans un circuit de fluide parallèle et autonome, doté de sa propre source énergétique.

Enfin, le dispositif d'amortissement mis en oeuvre dans les dispositifs de déverrouillage selon l'invention, présente l'avantage de conserver son pouvoir amortissant quelle que soit la température du milieu dans lequel doit intervenir la séparation des deux sous-ensembles, contrairement à certains dispositifs d'amortissement solides, comme ceux utilisant des élastomères, inefficaces à basse température.

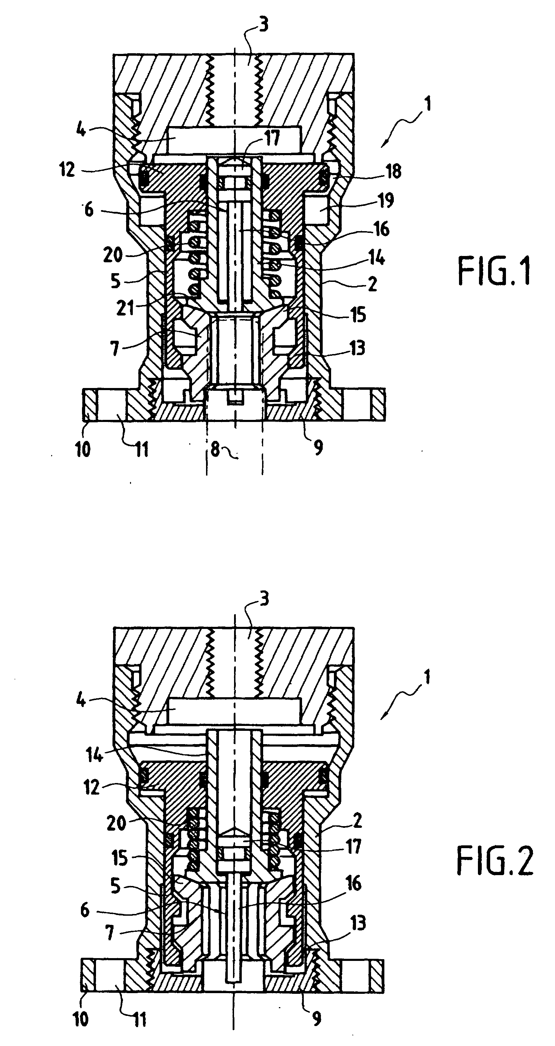

On donne, ci-après, la description détaillée d'un mode de réalisation préféré de l'invention en se référant aux figures 1 et 2.

La figure 1 est une vue en coupe axiale longitudinale d'un dispositif de déverrouillage selon l'invention n'ayant pas encore fonctionné.

La figure 2 est une vue en coupe axiale longitudinale du dispositif de la figure 1 en phase de fonctionnement. Contrairement à ce que montre la figure, le ressort n'atteint jamais sa configuration extrême de contrainte, c'est à dire la configuration pour laquelle ses spires sont jointives.

En se référant à la figure 1, un dispositif de déverrouillage 1 selon l'invention comprend un corps creux 2, un générateur de gaz 3, une chambre d'expansion 4 des gaz, une bague de libération 5, un éjecteur 6, un écrou segmenté 7, une vis de liaison 8 et un obturateur 9. Le corps 2 est une pièce sensiblement cylindrique possédant deux extrémités libres dont l'une présente une embase élargie 10 comportant sur une couronne périphérique deux alésages 11 diamètralement opposés destinés à recevoir chacun une vis de façon à solidariser ledit dispositif de déverrouillage 1 au deuxième sous-ensemble. Au niveau de ses deux extrémités, ledit corps 2 présente deux évasements se traduisant par deux parties cylindriques creuses de diamètre interne supérieur à celui de la partie centrale dudit corps 2. Le premier évasement correspond à la partie amont du dispositif de déverrouillage 1 et constitue, en partie, la chambre d'expansion 4 des gaz, le deuxième évasement correspondant à la partie aval dudit dispositif 1, c'est à dire celle où est située l'embase élargie 10 du corps 2, et étant destiné à recevoir une pièce appelée obturateur 9. L'obturateur 9 se présente sous la forme d'un disque plat, comportant un alésage central et prolongé par une collerette périphérique filetée sur sa surface latérale externe, ledit obturateur 9 étant destiné à venir se visser dans ledit évasement aval. La bague de libération 5 est une pièce cylindrique creuse possédant deux extrémités libres dont l'une présente une embase élargie 12 ayant une face externe circulaire plane, munie d'un alésage central. Ladite bague 5 est traversée par un canal central de section variable, présentant globalement une partie amont de diamètre réduit et traversant l'embase élargie 12, et une partie aval de diamètre supérieur possédant sur sa paroi latérale interne deux protubérances annulaires 13, semblables à deux anneaux parallèles entre eux, chaque protubérance 13 ayant une section sensiblement trapézoïdale dont le sommet est plan, permettant ainsi de définir une face supérieure annulaire plane. L'une des deux protubérances est située à l'extrémité libre de la partie aval du canal central de la bague 5. Ladite bague 5 enserre un écrou segmenté 7 et une pièce cylindrique creuse appelée séparateur 14, ces deux pièces 7, 14 étant au contact et en continuité l'une de l'autre. L'écrou 7, qui a une forme sensiblement cylindrique, est découpé en quatre segments identiques suivant quatre plans radiaux, perpendiculaires entre eux, et, lorsque les quatre segments se touchent, ledit écrou 7 présente un canal central fileté dans lequel est vissée une vis de liaison 8 reliant les deux sous-ensembles. La surface latérale externe dudit écrou 7 possède deux protubérances annulaires 15, semblables à deux anneaux parallèles entre eux, chaque protubérance 15 ayant une section sensiblement trapézoïdale dont le sommet est plan, permettant ainsi de définir une face supérieure annulaire plane. L'une des deux extrémités de l'écrou 7 se termine par l'une des deux protubérances 15 et présente un relief légèrement convexe. Les deux protubérances 15 de l'écrou 7 ont un écartement identique à celui que font les deux protubérances annulaires 13 situées sur la paroi interne de la bague 5. Le séparateur 14 est constitué par un corps cylindrique creux possédant à l'une de ses extrémités une tête élargie 21 légèrement concave présentant un alésage central, l'autre extrémité débouchant dans la chambre d'expansion 4. Le séparateur 14 renferme un éjecteur 6 sensiblement de même longueur qui est une pièce constituée par un corps cylindrique 16 dont une extrémité se termine par une tête élargie 17 légèrement conique ayant un diamètre sensiblement égal au diamètre interne du séparateur 14. Les différentes pièces, ci-avant décrites, sont agencées les unes par rapport aux autres selon les indications suivantes :
- Le séparateur 14 a le même axe de révolution que l'écrou 7 et est au contact dudit écrou 7 par l'intermédiaire de sa tête élargie 21, légèrement concave, qui vient en butée contre l'extrémité légèrement convexe de l'écrou 7.
- L'éjecteur 6 est logé dans le séparateur 14 de manière à ce que son corps cylindrique 16 traverse la tête élargie 21 dudit séparateur 14 pour venir en appui contre la vis de liaison 8 située dans l'écrou segmenté 7 et de manière à ce que sa tête élargie 17 affleure l'extrémité du séparateur 14 émergeant dans la chambre d'expansion 4 des gaz.
- Le séparateur 14 est situé dans la partie amont du canal central de la bague 5 et émerge de la face externe circulaire plane de l'embase élargie 12 de ladite bague 5.
- L'écrou 7 segmenté est enserré dans la bague 5 de façon à ce que ses protubérances annulaires 15 soient au contact de celles 13 de ladite bague 5 au niveau de leur face supérieure plane respective. Ainsi positionné, l'écrou 7 se présente sous forme compactée avec des segments qui se touchent.
- La bague de libération 5 est placée dans le corps 2 de sorte que sa paroi latérale externe soit au contact de la paroi latérale interne dudit corps 2, et son embase élargie 12 émerge dans l'évasement correspondant à la partie amont du dispositif de déverrouillage 1. Entre ledit évasement et la partie centrale du corps 2, il existe une zone de rétrécissement matérialisée par un alésage de diamètre intermédiaire, sensiblement égal au diamètre externe de l'embase élargie 12 de la bague 5 qui émerge dans l'évasement. De cette manière, la différence de diamètre, entre l'embase élargie 12 de la bague 5 et l'évasement, induit un passage annulaire 18 reliant la chambre d'expansion 4 des gaz à un espace libre, assimilable à une enceinte annulaire 19, placé entre l'alésage de diamètre intermédiaire et la surface latérale externe de la bague 5 située juste derrière ladite embase 12. La longueur de la bague 5 est telle, qu'ainsi positionnée, ladite bague 5 ménage un espace libre entre son extrémité opposée à celle matérialisée par l'embase élargie 12, et l'obturateur 9.
- Un ressort 20 légèrement pré-contraint, localisé dans l'espace compris entre le séparateur 14 et la bague de libération 5, vient en appui à la fois contre la tête élargie 21 dudit séparateur 14 et la face interne de l'embase élargie 12 de ladite bague 5.

Préférentiellement, le générateur de gaz 3 est un générateur de gaz pyrotechnique.

En se référant aux figures 1 et 2, le mode de fonctionnement du dispositif de déverrouillage 1 selon l'invention s'effectue comme suit. Le générateur de gaz 3 pyrotechnique reçoit une impulsion électrique destinée à l'amorcer. Une fois amorcé, les gaz émis envahissent la chambre d'expansion 4 puis s'engouffrent dans le passage annulaire 18 pour venir mettre en pression l'enceinte 19. Simultanément, les gaz dans la chambre 4 exercent une pression sur la tête élargie 17 de l'éjecteur 6 ainsi que sur l'extrémité du séparateur 14 émergeant dans ladite chambre 4. Lorsque la pression dans ladite chambre 4 atteint un niveau seuil, la bague de libération 5 entame un déplacement vers l'obturateur 9 permettant, d'une part, à son embase élargie 12 de venir occuper partiellement l'enceinte 19 sous pression tout en fermant le passage 18 et, d'autre part, de libérer l'écrou 7 dont les segments vont avoir tendance à s'ouvrir en pétales. En réalité, l'écrou 7 s'ouvre sous l'effet conjugué de la bague 5 qui se déplace, décalant ainsi leurs protubérances annulaires 13,15, et du séparateur 14 qui a tendance à exercer une pression sur ledit écrou 7 par l'intermédiaire de sa tête élargie 21. La vis de liaison 8 étant désolidarisée de l'écrou 7 et subissant une poussée de la part de l'éjecteur 6, est expulsée, permettant de séparer nettement les deux sous-ensembles. La bague de libération 5 finit sa course en étant amortie par le bourrelet pneumatique constitué par l'enceinte 19 sous pression, évitant ainsi de percuter l'obturateur 9 et donc de générer un choc mécanique important. Lorsque le générateur pyrotechnique 3 cesse de produire des gaz, le ressort 20, qui s'était comprimé lors du déplacement de la bague 5 sans jamais atteindre la configuration extrême pour laquelle ses spires sont jointives, se détend, ramenant ladite bague 5 à sa position initiale pour laquelle ses deux bourrelets annulaires 15 viennent au contact des deux bourrelets annulaires 13 de l'écrou 7 au niveau de leur face supérieure annulaire plane, avec pour conséquence majeure la reconstitution d'un écrou 7 continu par retour des segments jusqu'à ce qu'ils se touchent.

## Revendications

1. Dispositif de déverrouillage (1) de deux sous-ensembles, comprenant un corps (2), un générateur de gaz (3) , une chambre d'expansion (4) des gaz, une bague de libération (5), un éjecteur (6), un écrou segmenté (7), une vis de liaison (8) et un obturateur (9), l'initiation du générateur de gaz (3) entraînant la libération des gaz pour, d'une part, faire coulisser la bague de libération (5) de façon à libérer les segments de l'écrou (7) et, d'autre part, mettre en vitesse l'éjecteur (6) de manière à venir pousser la vis de liaison (8) pour l'éjecter dudit écrou (7), **caractérisé en ce qu'**un dispositif d'amortissement, réalisé par afflux d'un fluide compressible dans une enceinte (19) du dispositif de déverrouillage (1), est créé par la libération des gaz, ledit dispositif d'amortissement étant destiné à freiner puis à stopper la bague de libération (5) avant qu'elle n'atteigne l'obturateur (9).

2. Dispositif de déverrouillage selon la revendication 1, **caractérisé en ce que** le générateur de gaz (3) est un générateur de gaz pyrotechnique comprenant une charge pyrotechnique et un dispositif d'initiation.

3. Dispositif de déverrouillage selon la revendication 1, **caractérisé en ce que** le dispositif d'amortissement est réalisé par la mise sous pression gazeuse de l'enceinte (19).

4. Dispositif de déverrouillage selon la revendication 3, **caractérisé en ce que** la mise sous pression de l'enceinte (19) est effectuée par prélèvement de gaz au niveau de la chambre d'expansion (4), par l'intermédiaire d'un système de liaison mettant en communication l'enceinte (19) à ladite chambre (4).

5. Dispositif de déverrouillage selon la revendication 4, **caractérisé en ce que** la bague de libération (5) présente une embase élargie (12) dont une face est au contact de la chambre d'expansion (4), et l'enceinte (19) est constituée par un espace annulaire situé autour de ladite bague (5) et dans le prolongement de ladite embase (12), le système de liaison étant représenté par un passage annulaire (18) situé entre le corps (2) du dispositif de déverrouillage (1) et la surface latérale externe de l'embase élargie (12).

6. Dispositif de déverrouillage selon la revendication 1, **caractérisé en ce qu'**il comporte un dispositif de rappel (20) permettant à la bague (5) qui s'est déplacée lors du fonctionnement, de retrouver sa position initiale lorsque le générateur de gaz (3) ne produit plus de gaz.

7. Dispositif de déverrouillage selon la revendication 1, **caractérisé en ce que** l'éjecteur (6) se présente sous la forme d'un corps cylindrique (16) dont une extrémité se termine par une tête élargie (17) débouchant dans la chambre d'expansion (4) et dont l'autre extrémité est en appui contre la vis de liaison (8).

8. Dispositif de déverrouillage selon la revendication 7, **caractérisé en ce que** l'éjecteur (6) est logé dans un séparateur (14) assimilable à une pièce sensiblement cylindrique dont une extrémité émerge dans la chambre d'expansion (4) et dont l'autre extrémité se termine par une tête élargie (21) venant en appui contre l'écrou (7).

9. Dispositif de déverrouillage selon la revendication 6, **caractérisé en ce que** le dispositif de rappel (20) est constitué par un ressort venant en appui à la fois contre la tête élargie (21) du séparateur (14) et l'embase élargie (12) de la bague de libération (5).

10. Dispositif de déverrouillage selon la revendication 1, **caractérisé en ce que** la bague de libération (5) et l'écrou (7) comportent chacun au moins deux bourrelets annulaires (13, 15) dont les sections transversales présentent des lignes de pente permettant à ces deux pièces (5, 7) qui, au repos, sont en contact au niveau de leurs bourrelets respectifs (13, 15), de coulisser l'une par rapport à l'autre sous l'effet des gaz émis, puis de retrouver ensuite leur position de repos.

## Patentansprüche

1. Vorrichtung zum Entriegeln (1) von zwei Teilsystemen, mit einem Gehäuse (2), einem Gasgenerator (3), einer Expansionskammer der Gase (4), einem Freigabering (5), einem Ejektor (6), einer segmentierten Mutter (7), einer Verbindungsschraube (8) und einem Verschluss (9), wobei die Initialisierung des Gasgenerators (3) das Freisetzen der Gase nach sich zieht, um zum einen den Freigabering (5) derart zu verschieben, dass die Segmente der Mutter (7) freigegeben werden, und zum anderen den Ejektor (6) derart zu beschleunigen, dass er die Verbindungsschraube (8) aus der Mutter (7) herausschiebt, **dadurch gekennzeichnet, dass** beim Freisetzen der Gase eine Dämpfvorrichtung geschaffen wird, die durch Zustrom eines komprimierbaren Fluids in einen Raum (19) der Entriegelungsvorrichtung (1) entsteht, wobei die Dämpfvorrichtung dazu dient, den Freigabering (5) erst zu bremsen und dann zu stoppen, bevor er den Verschluss (9) erreicht.

2. Entriegelungsvorrichtung nach Anspruch 1, **dadurch gekennzeichnet, dass** der Gasgenerator (3) ein pyrotechnischer Gasgenerator mit pyrotechnischer Ladung und einer Initialisierungsvorrichtung ist.

3. Entriegelungsvorrichtung nach Anspruch 1, **dadurch gekennzeichnet, dass** die Dämpfvorrichtung entsteht, indem der Raum (19) unter Gasdruck gesetzt wird.

4. Entriegelungsvorrichtung nach Anspruch 3, **dadurch gekennzeichnet, dass** der Raum (19) durch Entnahme von Gas aus der Expansionskammer (4) über ein Verbindungssystem, das den Raum (19) mit der Kammer (4) verbindet, unter Druck gesetzt wird.

5. Entriegelungsvorrichtung nach Anspruch 4, **dadurch gekennzeichnet, dass** der Freigabering (5) eine verbreiterte Fußfläche (12) aufweist, die auf einer Seite in Kontakt mit der Expansionskammer (4) steht, und der Raum (19) aus einem ringförmigen Raum um den Ring (5) herum in der Verlängerung der Fußfläche (12) gebildet ist, wobei das Verbindungssystem aus einem ringförmigen Durchgang (18) besteht, der sich zwischen dem Gehäuse (2) der Entriegelungsvorrichtung (1) und der äußeren Seitenfläche der verbreiterten Fußfläche (12) befindet.

6. Entriegelungsvorrichtung nach Anspruch 1, **dadurch gekennzeichnet, dass** sie eine Rückholvorrichtung (20) aufweist, die dem Ring (5), der sich beim Betrieb verschoben hat, in seine Ausgangsposition zurückzukehren erlaubt, wenn der Gasgenerator (3) kein Gas mehr erzeugt.

7. Entriegelungsvorrichtung nach Anspruch 1, **dadurch gekennzeichnet, dass** der Ejektor (6) die Form eines zylindrischen Körpers (16) besitzt, dessen eines Ende in einem verbreiterten Kopf (17) endet, der in die Expansionskammer (4) mündet und dessen anderes Ende an der Verbindungsschraube (8) anliegt.

8. Entriegelungsvorrichtung nach Anspruch 7, **dadurch gekennzeichnet, dass** der Ejektor (6) in einem Separator (14) untergebracht ist, der einem im Wesentlichen zylindrischen Teil angepasst werden kann und dessen eines Ende in die Expansionskammer (4) hineinragt und dessen anderes Ende in einem verbreiterten Kopf (21) endet, der an der Mutter (7) anliegt.

9. Entriegelungsvorrichtung nach Anspruch 6, **dadurch gekennzeichnet, dass** die Rückholvorrichtung (10) aus einer Feder besteht, die zugleich am verbreiterten Kopf (21) des Separators (14) und an der verbreiterten Fußfläche (12) des Freigaberings (5) anliegt.

10. Entriegelungsvorrichtung nach Anspruch 1, **dadurch gekennzeichnet, dass** der Freigabering (5) und die Mutter (7) jeweils mindestens zwei ringförmige Wulste (13, 15) umfassen, deren Querschnitte Neigungslinien aufweisen, die es den beiden Teilen (5, 7), die sich in Ruhestellung an ihren jeweiligen Wulsten (13, 15) miteinander in Kontakt befinden, erlauben, sich unter der Wirkung der ausgestoßenen Gase gegeneinander zu verschieben und dann in ihre Ruhestellung zurückzukehren.

## Claims

1. Unlocking device (1) for two sub-assemblies, comprising a body (2), a gas generator (3), a chamber (4) for expansion of the gases, a release ring (5), an ejector (6), a segmented nut (7), a connection screw (8) and a shutter (9), the initiation of the gas generator (3) giving rise to release of the gases, firstly in order to make the release ring (5) slide such as to release the segments of the nut (7), and secondly to bring the ejector (6) up to speed such as to thrust the connection screw (8) in order to eject it from the said nut (7), **characterised in that** a damping device, which is provided by the flow of a compressible fluid into an enclosure (19) of the unlocking device (1) is created by the release of the gases, the said damping device being designed to brake then stop the release ring (5) before it reaches the shutter (9).

2. Unlocking device according to claim 1, **characterised in that** the gas generator (3) is a pyrotechnic gas generator comprising a pyrotechnic charge and an initiation device.

3. Unlocking device according to claim 1, **characterised in that** the damping device is provided by putting the enclosure (19) under gaseous pressurisation.

4. Unlocking device according to claim 3, **characterised in that** the enclosure (19) is put under pressure by collecting gas at the level of the expansion chamber (4), by means of a connection system which puts the enclosure (19) into communication with the said chamber (4).

5. Unlocking device according to claim 4, **characterised in that** the release ring (5) has an enlarged base (12), one surface of which is in contact with the expansion chamber (4), and the enclosure (19) is constituted by an annular space which is situated around the said ring (5) and in the extension of the said base (12), the connection system being represented by an annular passage (18) situated between the body (2) of the unlocking device (1) and the outer lateral surface of the enlarged base (12).

6. Unlocking device according to claim 1, **characterised in that** it comprises a return device (20) which allows the ring (5) which has become displaced during functioning to regain its initial position when the gas generator (3) no longer produces gas.

7. Unlocking device according to claim 1, **characterised in that** the ejector (6) is in the form of a cylindrical body (16), one end of which ends in an enlarged head (17) which opens into the expansion chamber (4), and the other end of which is supported against the connection screw (8).

8. Unlocking device according to claim 7, **characterised in that** the ejector (6) is accommodated in a separator (14) which can be assimilated to a substantially cylindrical part, one end of which emerges into the expansion chamber (4) and the other end of which ends in an enlarged head (21) which is supported against the nut (7).

9. Unlocking device according to claim 6, **characterised in that** the return device (20) consists of a spring which is supported both against the enlarged head (21) of the separator (14) and the enlarged base (12) of the release ring (5).

10. Unlocking device according to claim 1, **characterised in that** the release ring (5) and the nut (7) each comprise at least two annular collars (13, 15), the transverse cross-sections of which have gradient lines which allow these two parts (5, 7) which, when at rest, are in contact at the level of their respective collars (13, 15), to slide relative to one another under the effect of the gases emitted, then to regain their position of rest.
